# FASCICULE DE BREVET EUROPEEN

(11) **EP 3 183 135 B1**
(45) Date de publication et mention de la délivrance du brevet: **12.09.2018**
(21) Numéro de dépôt: 15738354.8
(22) Date de dépôt: 16.07.2015
(51) Int. Cl.: B60K 1/00, B60K 11/02, B60H 1/00

(54) **DISPOSITIF DE RÉGULATION THERMIQUE D'UNE BATTERIE COMPORTANT UN ÉVAPORATEUR DE REFROIDISSEMENT DE LA BATTERIE ET UN RADIATEUR DE CHAUFFAGE DE LA BATTERIE**
THERMISCHE REGELUNGSEINRICHTUNG EINER BATTERIE, UMFASSEND EINEN BATTERIEKÜHLUNGSVERDAMPFER UND EINEN BATTERIEHEIZUNGSRADIATOR
THERMAL REGULATION DEVICE OF A BATTERY, COMPRISING A BATTERY COOLING EVAPORATOR AND A BATTERY HEATING RADIATOR

(30) Priorité: 19.08.2014 FR 1457869
(43) Date de publication de la demande: 28.06.2017
(73) Titulaire: Renault S.A.S., 92100 Boulogne-Billancourt (FR)
(72) Inventeur: JANIER, Benoît, 92370 Chaville (FR); DAVID, Pascal, 78960 Voisins-le-Bretonneux (FR)
(86) Numéro de dépôt international: PCT/EP2015/066241
(87) Numéro de publication internationale: WO 2016/026619

(56) Documents cités:
- DE-A1-102007 004 979
- US-A1- 2002 184 908
- US-A1- 2007 157 647

## Description

### DOMAINE TECHNIQUE DE L'INVENTION

L'invention concerne un dispositif de régulation thermique d'une batterie d'accumulateurs électriques embarquée à bord d'un véhicule automobile.

### ARRIERE PLAN TECHNIQUE DE L'INVENTION

L'invention concerne plus particulièrement un dispositif de régulation thermique d'une batterie d'accumulateurs électriques embarquée à bord d'un véhicule automobile, le dispositif de régulation thermique comportant :
- un circuit de climatisation du véhicule automobile dans lequel circule un premier fluide caloporteur dit "fluide de climatisation", le circuit de climatisation comportant au moins un évaporateur qui permet de transférer directement la chaleur émise par la batterie au fluide de climatisation, un compresseur permettant d'élever la pression et la température du fluide de climatisation ;
- un circuit de refroidissement dans lequel circule un deuxième fluide caloporteur dit "fluide de refroidissement", le circuit de refroidissement comportant au moins une première source de chaleur susceptible de chauffer le fluide de refroidissement, et au moins un radiateur principal de refroidissement du fluide de refroidissement qui est susceptible d'être court-circuité ;

Un véhicule automobile de type électrique ou hybride est mu, au moins en partie, par un moteur électrique de traction qui est alimenté en électricité par une batterie de traction. Les performances de la batterie de traction sont susceptibles de varier fortement en fonction de sa température.

Lorsque la batterie est soumise à des températures très froides, par exemple négatives, elle perd sa capacité énergétique. Une recharge rapide de la batterie peut alors être interdite. Il est donc nécessaire de réchauffer la batterie avant de procéder à sa recharge.

De même, l'utilisation de la batterie produit de la chaleur. Lorsque la batterie est déjà surchauffée, soit du fait d'une température ambiante élevée, soit à cause d'une alternance trop rapide de décharges et de recharges, il peut être nécessaire d'interdire l'utilisation de la batterie pour préserver les cellules. Ceci implique généralement que le véhicule soit immobilisé le temps que la batterie refroidisse jusqu'à une température acceptable de fonctionnement.

Pour résoudre ces problèmes, il est connu d'équiper le véhicule d'un dispositif de régulation thermique de la batterie afin de maintenir les cellules de batterie dans une plage de températures de fonctionnement optimales.

On a ainsi proposé d'équiper la batterie avec un circuit de fluide caloporteur qui permet, selon les besoins, de la refroidir ou de la réchauffer.

Ainsi, dans la demande DE-A1-10 2007 004 979, le fluide caloporteur circule dans un circuit de climatisation du véhicule. De cette manière, la batterie est refroidie parallèlement à l'habitable du véhicule.

Par ailleurs, la gestion électrique de la batterie est prise en charge par une unité électronique de commande qui dégage une forte chaleur lors de son fonctionnement. Pour éviter la dégradation des composants électroniques de cette unité, elle est refroidie par un circuit de refroidissement distinct du circuit de climatisation. Un radiateur principal permet de dissiper la chaleur émise par l'unité électronique de commande.

Pour permettre de réchauffer la batterie, il est connu d'utiliser la chaleur dégagée par l'unité électronique de commande. A cet effet, un échangeur de chaleur permet de transférer la chaleur transportée par le fluide de refroidissement au fluide de climatisation circulant dans le circuit de climatisation.

Pour améliorer la capacité de chauffage de la batterie, le circuit de refroidissement est équipé d'une conduite qui est susceptible de court-circuiter le radiateur principal lorsque la batterie a besoin d'être réchauffée.

Un tel dispositif selon DE-A1-10 2007 004 979 présente néanmoins de nombreux inconvénients. Ainsi, l'agencement de l'échangeur de chaleur pour permettre de réchauffer le fluide de climatisation avant de pouvoir réchauffer la batterie entraîne un surcoût dans la fabrication du dispositif de régulation thermique.

En outre, la chaleur émise par l'unité électronique de commande n'est pas entièrement transmise à la batterie car une partie de la chaleur est perdue dans l'échangeur de chaleur. Ce dispositif n'est donc pas totalement efficace.

De plus, le dispositif selon l'état de la technique ne permet pas de réchauffer rapidement la batterie lors d'un démarrage à froid du véhicule. En effet, l'unité électronique de commande commence à chauffer seulement après un certain temps d'utilisation. Durant ce laps de temps, aucune source chaude n'est disponible pour réchauffer la batterie. Il est donc nécessaire de recourir à l'utilisation de thermoplongeurs qui sont très gourmands en énergie.

### BREF RESUME DE L'INVENTION

L'invention propose un dispositif de régulation de la température du type décrit précédemment, caractérisé en ce que le circuit de refroidissement comporte un deuxième radiateur secondaire dit "radiateur de batterie" qui permet de transférer directement la chaleur transportée par le fluide de refroidissement chaud à la batterie lorsque le radiateur principal du circuit de refroidissement est court-circuité.

Selon d'autres caractéristiques de l'invention :
- le circuit de refroidissement comporte une deuxième source de chaleur qui est formée par un échangeur de chaleur qui est agencé directement en amont du radiateur de batterie et qui permet de transférer la chaleur du fluide de climatisation directement au fluide de refroidissement, l'échangeur de chaleur étant agencé directement en aval du compresseur dans le circuit de climatisation ;
- le circuit de climatisation comporte :
   -- une conduite de modulation qui est agencée de manière à court-circuiter les évaporateurs en aval du condenseur et en amont du compresseur par commande d'une vanne de modulation lorsque le circuit de climatisation fonctionne selon un mode dit "pompe à chaleur" ; et
   -- un détendeur qui est agencé en dérivation entre l'échangeur de chaleur et un condenseur, une vanne de dérivation permettant de commander le passage du fluide de climatisation dans le détendeur dans le mode "pompe à chaleur" du circuit de climatisation ;
- le circuit de refroidissement comporte une conduite de démarrage à froid dont une première extrémité est raccordée en dérivation entre le radiateur de batterie et la première source de chaleur et dont une deuxième extrémité est agencée en amont de l'échangeur de chaleur, une pompe étant agencée dans la branche comportant le radiateur de batterie, et une vanne de démarrage à froid permettant, dans une première position de démarrage à froid, de faire tourner en boucle le fluide de refroidissement en court-circuitant simultanément la première source de chaleur et le radiateur principal ;
- la vanne de démarrage à froid est susceptible d'être commandée dans une deuxième position de chauffage lorsque la première source de chaleur est suffisamment chaude et dans laquelle le fluide de refroidissement tourne en boucle en passant par la première source de chaleur puis par la deuxième source de chaleur avant d'atteindre la batterie, la conduite 60 de démarrage à froid étant obturée ;
- la vanne de démarrage à froid est susceptible d'être commandée dans une troisième position dans laquelle le radiateur de batterie est court-circuitée, le circuit de refroidissement comportant une deuxième pompe pour permettre la circulation du fluide de refroidissement entre la première source de chaleur et le radiateur principal ;
- le circuit de refroidissement comporte des thermoplongeurs qui sont commandés pour chauffer le fluide de refroidissement lorsque les deux sources de chaleurs ne sont pas assez chaudes ;
- la partie de l'échangeur de chaleur qui est traversée par le fluide de climatisation forme un condenseur ;
- la première source de chaleur est formée par une unité électronique de commande qui gère la charge électrique de la batterie.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est un schéma qui représente un dispositif de régulation thermique d'une batterie réalisé selon les enseignements de l'invention, le dispositif fonctionnant selon un état de refroidissement de la batterie ;
- la figure 2 est un schéma similaire à celui de la figure 1 qui représente le dispositif de régulation thermique fonctionnant selon un premier état de chauffage de la batterie lorsque l'unité électronique de commande est déjà chaude ;
- la figure 3 est un schéma similaire à celui de la figure 1 qui représente le dispositif de régulation thermique fonctionnant selon un deuxième état de réchauffage de la batterie en cas de démarrage à froid.

### DESCRIPTION DETAILLEE DES FIGURES

Dans la suite de la description, des éléments présentant une structure identique ou des fonctions similaires seront désignés par une même référence.

Dans la suite de la description, les termes "amont" et "aval" seront utilisés en fonction du sens d'écoulement des fluides caloporteurs dans leurs circuits respectifs.

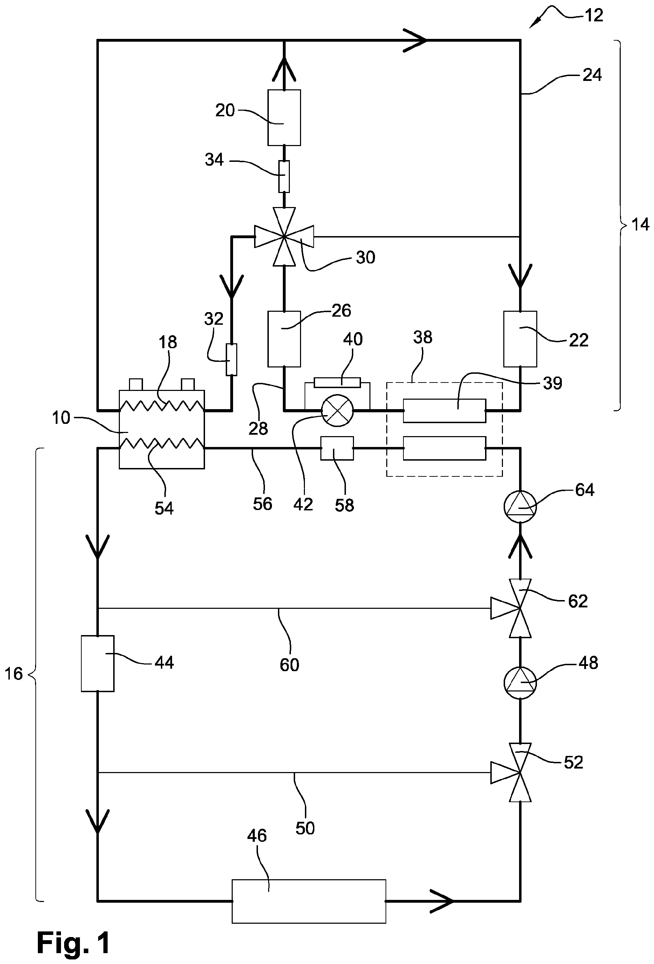

On a représenté à la figure 1 une batterie 10 d'accumulateurs électriques qui est embarquée à bord d'un véhicule automobile. Il s'agit par exemple d'une batterie 10 de traction qui alimente un moteur électrique de traction du véhicule.

Durant le fonctionnement du véhicule, la température de la batterie 10 est régulée par un dispositif 12 de régulation thermique qui est embarqué à bord du véhicule. La température de batterie 10 est régulée de manière à être maintenue dans une plage de températures optimales de fonctionnement.

Le dispositif 12 de régulation thermique comporte principalement :
- un circuit 14 de climatisation du véhicule dans lequel circule un premier fluide caloporteur dit "fluide de climatisation" ; et
- un circuit 16 de refroidissement dans lequel circule un deuxième fluide caloporteur dit "fluide de refroidissement".

Ces deux circuits 14 et 16 sont étanches l'un par rapport à l'autre, c'est-à-dire que le fluide de climatisation et le fluide de refroidissement ne sont pas mélangés.

Le fluide de climatisation est destiné à changer de phase en circulant dans le circuit 14 de climatisation, comme cela sera expliqué plus en détails par la suite. Il s'agit par exemple de fréon.

Le circuit 14 de climatisation, représenté en haut aux figures, comporte un premier évaporateur 18 qui traverse la batterie 10. Le premier évaporateur 18 permet de transférer directement la chaleur émise par la batterie 10 au fluide de climatisation froid. Pour cette raison, ce premier évaporateur 18 sera désigné par la suite "évaporateur 18 de batterie". Cet évaporateur 18 de batterie est destiné à refroidir la batterie 10 lorsque sa température dépasse un seuil supérieur déterminé

Le circuit 14 de climatisation est aussi destiné à refroidir un habitacle du véhicule. A cet effet, le circuit 14 de climatisation comporte aussi un deuxième évaporateur 20 qui est agencé parallèlement à l'évaporateur 18 de batterie. Le deuxième évaporateur 20, dit "évaporateur 20 d'habitacle", est agencé dans un conduit d'aération (non représenté) de l'habitacle pour en refroidir l'air.

Dans chacun des évaporateurs 18, 20, le fluide de climatisation passe de la phase liquide à la phase gazeuse par évaporation. Ceci provoque une absorption de chaleur par le fluide de climatisation.

Les deux évaporateurs 18, 20 sont raccordés en parallèle à un compresseur 22 commun qui est agencé en aval par l'intermédiaire d'une conduite 24 commune. Le compresseur 22 est destiné à comprimer le fluide de climatisation gazeux. Ceci a pour conséquence une augmentation de la température et de la pression du fluide de climatisation.

Le compresseur 22 alimente un condenseur 26 aval par l'intermédiaire d'une conduite 28. Dans le condenseur 26, le fluide de climatisation passe de la phase gazeuse à la phase liquide par condensation. Ceci provoque une perte de chaleur du fluide de climatisation.

Le condenseur 26 alimente ensuite chacun des évaporateurs 18, 20 en fluide de climatisation par l'intermédiaire d'une vanne 30 commandée de modulation.

En amont de chaque évaporateur 18, 20, et en aval de la vanne 30 de modulation, est agencé un détendeur 32, 34 associé pour permettre de réduire la pression, et ainsi la température, du fluide de climatisation liquide avant d'atteindre l'évaporateur 18, 20 associé.

Le circuit 14 de climatisation est aussi susceptible de fonctionner dans un mode "pompe à chaleur".

A cet effet, le circuit 14 de climatisation comporte une conduite 36 de modulation qui est agencée de manière à court-circuiter les évaporateurs 18, 20 directement en aval du condenseur 26. La conduite 36 de modulation mène ainsi le fluide de climatisation depuis le condenseur 26 directement au compresseur 22.

Le passage du fluide de climatisation dans la conduite 36 de modulation est commandé par une vanne. Il s'agit ici de la vanne 30 de modulation. La vanne 30 de modulation est ainsi susceptible d'être commandée dans au moins deux positions :
- une première position dite "de climatisation" dans laquelle le fluide de climatisation circule vers les évaporateurs 18, 20 tandis que la conduite 36 de modulation est obturée ; et
- une deuxième position dite "de pompe à chaleur" dans laquelle le fluide de climatisation circule directement vers le compresseur 22 via la conduite 36 de modulation, les évaporateurs 18, 20 n'étant plus alimentés en fluide de climatisation.

En outre, un échangeur 38 thermique est interposé dans la conduite 28 qui mène depuis le compresseur 22 jusqu'au condenseur 26. L'échangeur 38 de chaleur est ainsi agencé directement en aval du compresseur 22 de manière à être traversé par le fluide de climatisation gazeux chaud.

Comme cela sera expliqué par la suite, l'échangeur 38 de chaleur permet de transférer la chaleur transportée par le fluide de climatisation au fluide de refroidissement. La structure et la fonction de cet échangeur 38 de chaleur seront décrites en détails par la suite.

Dans le mode de réalisation représenté aux figures, la partie de l'échangeur 38 de chaleur qui est traversée par le fluide de climatisation forme un condenseur 39.

Un détendeur 40 qui est agencé en dérivation par rapport à au tronçon de conduite 28 situé entre l'échangeur 38 thermique et le condenseur 26. Une vanne 42 de dérivation est commandée entre :
- une première position dite "directe", dans laquelle le fluide de climatisation circule directement dans la conduite 28 sans forcer le passage à travers le détendeur 40 dans un mode de fonctionnement normal du circuit 14 de climatisation dit "mode de climatisation" ; et
- une deuxième position dite "de détente" dans laquelle la circulation du fluide de climatisation est déviée vers le détendeur 40 dans le mode "pompe à chaleur" du circuit 14 de climatisation.

Le circuit 16 de refroidissement, qui est représenté en bas aux figures, est à présent décrit en détail.

Dans ce circuit 16 de refroidissement, le fluide de refroidissement est destiné à demeurer en phase liquide. Il s'agit par exemple d'un mélange d'eau et d'antigel.

Le circuit 16 de refroidissement comporte une première source 44 de chaleur qui est susceptible de chauffer le fluide de refroidissement. La première source 44 de chaleur est ici formée par une unité 44 électronique de commande qui a pour fonction de gérer la charge électrique de la batterie 10. Une telle unité 44 électronique de commande est connue pour dégager une forte chaleur lors de son fonctionnement. Or, ses composants électroniques sont susceptibles d'être dégradés en cas de température trop élevée. Le circuit 16 de refroidissement permet donc de faire baisser la température de l'unité 44 électronique de commande en permettant au fluide de refroidissement froid d'absorber la chaleur émise par l'intermédiaire d'une surface d'échange de chaleur (non représentée).

Le fluide de refroidissement ainsi chauffé par l'unité 44 électronique de commande est acheminé jusqu'à un radiateur 46 principal de refroidissement du fluide de refroidissement. Le fluide de refroidissement est mis en circulation au moyen d'une première pompe 48 qui est ici agencée en aval du radiateur 46 principal et en amont de l'unité 44 électronique de commande.

Le circuit 16 de refroidissement comporte aussi une conduite 50 de chauffage qui permet de court-circuiter le radiateur 46 principal. Cette conduite 50 de chauffage est raccordée en aval de l'unité 44 électronique de commande et en amont de la première pompe 48. Une vanne 52 de chauffage est commandée sélectivement entre :
- une première position de refroidissement dans laquelle le fluide de refroidissement passe par le radiateur 46 principal en obturant le passage dans la conduite 50 de chauffage ; et
- une deuxième position de chauffage dans laquelle le radiateur 46 principal est court-circuité.

Le circuit 16 de refroidissement comporte un deuxième radiateur 54 secondaire dit "radiateur 54 de batterie" qui permet de transférer directement par conduction la chaleur transportée par le deuxième fluide de refroidissement chaud à la batterie 10 lorsque le radiateur 46 principal du circuit 16 de refroidissement est court-circuité.

Le radiateur 54 de batterie est agencé dans un tronçon 56 de conduite agencé en aval de la première pompe 48 et en amont de l'unité 44 électronique de commande. Ce tronçon 56 sera par la suite désigné "tronçon 56 de chauffage"

Le circuit 16 de refroidissement comporte une deuxième source de chaleur qui est formée par l'échangeur 38 de chaleur qui est agencé dans le tronçon 56 de chauffage directement en amont du radiateur 54 de batterie et en aval de la première pompe 48. L'échangeur 38 de chaleur permet de transférer la chaleur du fluide de climatisation directement au fluide de refroidissement lorsque le circuit 14 de climatisation fonctionne en mode "pompe à chaleur".

Le circuit 16 de refroidissement comporte aussi des thermoplongeurs 58 qui sont agencés dans le tronçon 56 de chauffage, entre l'échangeur 38 de chaleur et le radiateur 54 de batterie. Les thermoplongeurs 58 sont commandés pour chauffer le fluide de refroidissement lorsque la température de la batterie 10 est inférieure à un seuil inférieur déterminé et lorsque la quantité de chaleur fournie par l'échangeur 38 de chaleur et/ou l'unité 44 électronique de commande est insuffisante.

Le circuit 16 de refroidissement comporte aussi une conduite 60 dite "conduite 60 de démarrage à froid" dont une première extrémité est raccordée en dérivation entre le radiateur 54 de batterie et l'unité 44 électronique de commande et dont une deuxième extrémité est agencée en amont de l'échangeur 38 de chaleur et en aval de la première pompe 48.

Une vanne 62 de démarrage à froid permet de commander sélectivement entre au moins deux positions :
- une première position de démarrage à froid dans laquelle le fluide de refroidissement circule en boucle dans la conduite 60 de démarrage à froid et dans le tronçon 56 de chauffage comportant le radiateur 54 de batterie en court-circuitant simultanément l'unité 44 électronique de commande et le radiateur 46 principal ;
- une deuxième position de chauffage dans laquelle la conduite 60 de démarrage à froid est obturée lorsque l'unité 44 électronique de chauffage dépasse une température déterminée.

Pour permettre la circulation en boucle du fluide de refroidissement lorsque la vanne 62 de démarrage à froid est en position de démarrage à froid, une deuxième pompe 64 est agencée dans le tronçon 56 de chauffage, en aval de la vanne 62 de démarrage à froid et en amont de l'échangeur 38 de chaleur.

En variante non représentée de l'invention, la vanne de démarrage à froid est susceptible d'être commandée dans une troisième position dans laquelle le tronçon de conduite comportant le radiateur de batterie est court-circuité. La circulation du fluide de refroidissement entre le radiateur principal et l'unité électronique de commande est alors assurée par la première pompe.

Toutes les vannes sont par exemple des électrovannes qui sont commandées automatiquement en fonction de différents paramètres dont la température de la batterie 10.

On décrit à présent, en référence à la figure 1, le fonctionnement du dispositif 12 de régulation thermique en fonction de différents paramètres, dont la température de la batterie 10 et la température de l'unité 44 électronique de commande. Le dispositif 12 de régulation thermique est susceptible d'être commandé sélectivement entre trois états de fonctionnement.

Comme illustré à la figure 1, lorsque la température de la batterie 10 excède un seuil supérieur déterminé, le dispositif 12 de régulation thermique est commandé dans un état de refroidissement de la batterie 10.

Le circuit 14 de climatisation fonctionne alors en mode "climatisation" dans lequel la vanne 30 de modulation occupe sa première position de climatisation et dans lequel la vanne 42 de dérivation occupe sa première position "directe". Le flux du fluide de climatisation est représenté en gras à la figure 1. Dans cet état de refroidissement, la température du fluide de climatisation passant à travers l'échangeur 38 de chaleur est insuffisante pour modifier sensiblement la température du fluide de refroidissement.

Le circuit 16 de refroidissement fonctionne quant à lui de manière à refroidir l'unité 44 électronique de commande. A cet effet, la vanne 52 de chauffage est commandée dans sa position de refroidissement et la deuxième vanne 62 de démarrage à froid est commandée dans sa position de chauffage.

Lorsque le dispositif 12 de régulation thermique est commandé dans son état de refroidissement, la batterie 10 est refroidie normalement par le circuit 14 de climatisation et l'unité 44 électronique de commande est refroidie par le circuit 16 de refroidissement. La batterie 10 est aussi refroidie partiellement par le circuit 16 de refroidissement, le fluide de refroidissement circulant à travers le radiateur 54 de batterie ayant été refroidi préalablement par le radiateur 46 principal.

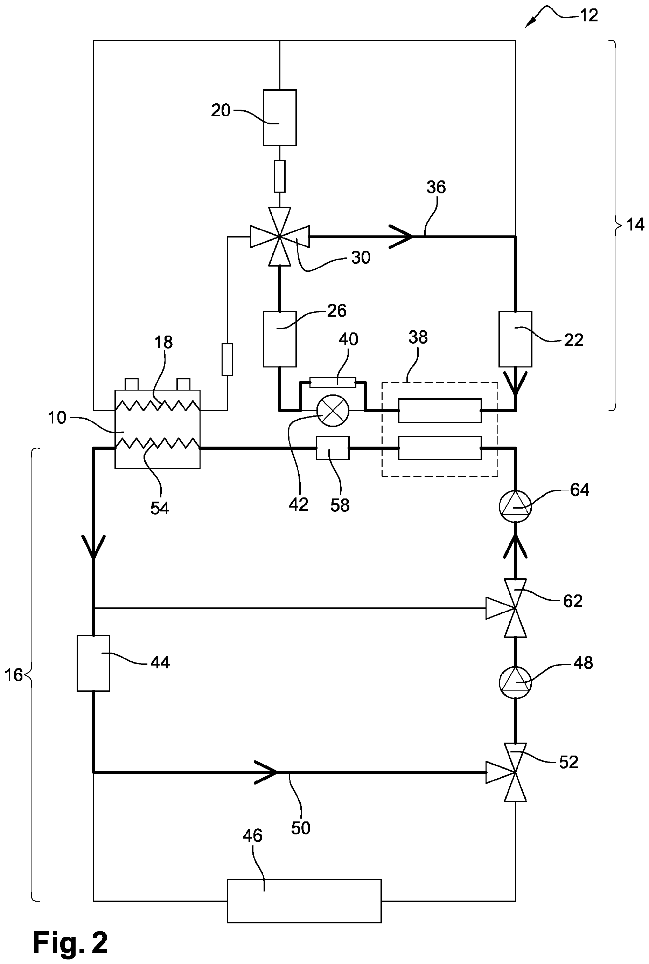

Comme représenté à la figure 2, lorsque la température de la batterie 10 est inférieure à un seuil inférieur de température, et lorsque l'unité 44 électronique de commande dépasse une température déterminée, le dispositif 12 de régulation thermique est commandé dans un premier état de chauffage de la batterie 10.

Le circuit 14 de climatisation est alors commandé pour fonctionner en mode "pompe à chaleur". Ainsi, la vanne 30 de modulation est commandée dans sa position de pompe à chaleur, court-circuitant les évaporateurs 18, 20 via la conduite 36 de modulation. De même, la vanne 42 de dérivation est commandée dans sa position de détente pour dévier la circulation du fluide de climatisation vers le détendeur 40. La boucle suivie par le fluide de climatisation, représentée en gras à la figure 2, fonctionne comme une pompe à chaleur.

Ainsi, le fluide de climatisation absorbe de la chaleur dans le condenseur 26. Puis, en sortie de compresseur 22, le fluide de climatisation comprimé transporte une importante quantité de chaleur. L'échangeur 38 de chaleur est le seul organe qui permet au fluide de climatisation de donner de la chaleur. Ainsi, une grande quantité de chaleur est transmise au fluide de refroidissement à travers l'échangeur 38 de chaleur.

Dans le circuit 16 de refroidissement, la vanne 52 de chauffage est commandée vers sa position de chauffage. Ainsi, le fluide de refroidissement circule dans la boucle représentée en gras à la figure 2, sans être refroidi par le radiateur 46 principal. La vanne 62 de démarrage à froid demeure dans sa position de chauffage.

Le fluide de refroidissement est mis en circulation par la première pompe 48 et/ou par la deuxième pompe 64. Le fluide de refroidissement absorbe ainsi la chaleur de l'unité 44 électronique de commande, puis il absorbe la chaleur transmise par le fluide de climatisation chaud à travers l'échangeur 38 de chaleur. Ceci permet ainsi de refroidir l'unité 44 électronique de commande.

Le fluide de refroidissement chaud passe ensuite à travers le radiateur 54 de batterie pour transmettre au moins une partie de la chaleur transporté à la batterie 10 pour réchauffer cette dernière. Le fluide de refroidissement ainsi refroidi recommence un nouveau cycle.

Lorsque le dispositif 12 de régulation thermique est commandé dans son premier état de chauffage, les thermoplongeurs 58 sont activés uniquement lorsque l'unité 44 électronique de commande et l'échangeur 38 de chaleur ne sont pas assez chauds pour réchauffer efficacement la batterie 10.

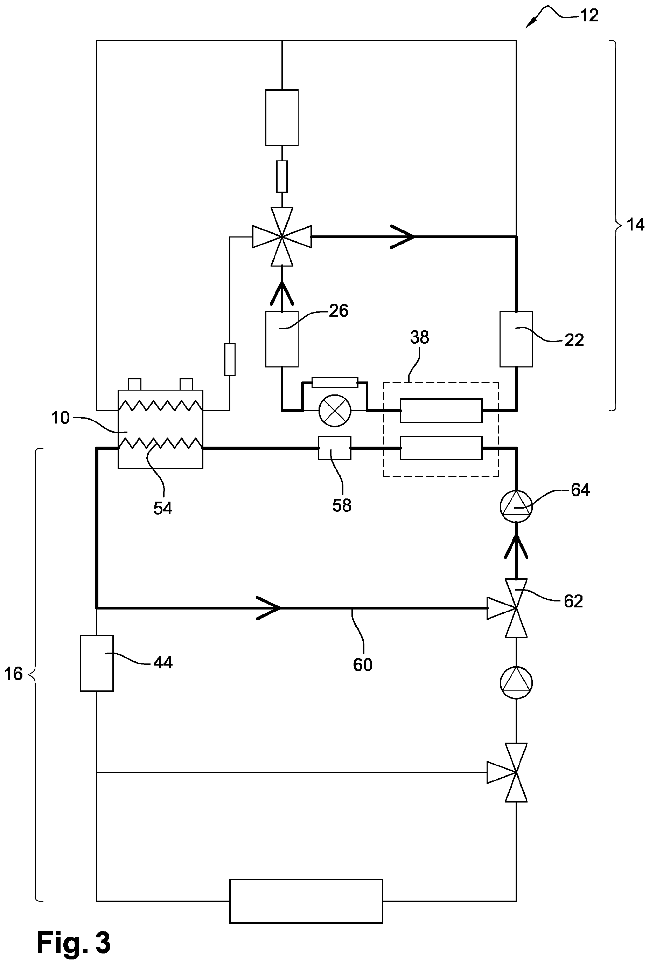

Comme représenté à la figure 3, lorsque la température de la batterie 10 est inférieure à son seuil inférieur de température, et lorsque l'unité 44 électronique de commande présente une température inférieure à une deuxième température déterminée, le dispositif 12 de régulation thermique est commandé dans un deuxième état de chauffage dit "état de démarrage à froid".

Cette deuxième température est déterminée de manière que l'unité 44 électronique de commande ne soit pas détériorée. Lorsque la température de l'unité 44 électronique de commande dépasse cette température déterminée, on estime qu'il est nécessaire de le refroidir. Le dispositif 12 de régulation thermique est alors commandé dans son deuxième état de chauffage.

Dans cet état de démarrage à froid, le circuit 14 de climatisation fonctionne toujours en mode "pompe à chaleur" comme expliqué pour le premier état de chauffage du dispositif 12 de régulation thermique.

En revanche, la vanne 62 de démarrage à froid du circuit 16 de refroidissement est commandée dans sa position de démarrage à froid. Le fluide de refroidissement alors mis en circulation par la deuxième pompe 64 dans la boucle indiquée en gras à la figure 3. Ainsi, le fluide de refroidissement est réchauffé en passant à travers l'échangeur 38 de chaleur. Le fluide de refroidissement chaud passe ensuite dans le radiateur 54 de batterie pour réchauffer la batterie 10. Le fluide de refroidissement ainsi refroidi est directement acheminé jusqu'à l'échangeur 38 de chaleur via la conduite 60 de démarrage à froid pour recommencer un nouveau cycle.

Lorsque le dispositif 12 de régulation thermique est commandé dans son état de démarrage à froid, la batterie 10 est réchauffée de manière particulièrement efficace par le circuit 14 de climatisation fonctionnant en mode pompe à chaleur car le fluide de refroidissement ne perd pas de chaleur en passant à travers l'unité 44 électronique de commande froide.

Le dispositif 12 de régulation thermique réalisé selon les enseignements de l'invention permet ainsi de réchauffer la batterie 10 lors d'un démarrage à froid, même lorsque l'unité 44 électronique de commande est froide, et sans utiliser les thermoplongeurs 58. Le circuit 14 de climatisation fonctionnant en mode "pompe à chaleur" permet de réchauffer la batterie 10 avec un rendement bien supérieur à celui d'un thermoplongeur. Il est ainsi possible de réchauffer la batterie 10 avec une consommation électrique moindre que des solutions utilisant les thermoplongeurs.

En outre, la régulation thermique de la batterie 10 est particulièrement efficace du fait que le refroidissement de la batterie 10 et le réchauffage de la batterie 10 sont assurés par deux organes distincts. Ainsi, l'évaporateur 18 de batterie du circuit 14 de climatisation est dédié au refroidissement de la batterie 10, tandis que le radiateur 54 de batterie du circuit 16 de refroidissement permet de réchauffer directement la batterie 10.

## Revendications

1. Dispositif (12) de régulation thermique d'une batterie (10) d'accumulateurs électriques embarquée à bord d'un véhicule automobile, le dispositif (12) de régulation thermique comportant :
- un circuit (14) de climatisation du véhicule automobile dans lequel circule un premier fluide caloporteur dit "fluide de climatisation", le circuit (14) de climatisation comportant au moins un évaporateur (18) qui permet de transférer directement la chaleur émise par la batterie (10) au fluide de climatisation, un compresseur (22) permettant d'élever la pression et la température du fluide de climatisation ;
- un circuit (16) de refroidissement dans lequel circule un deuxième fluide caloporteur dit "fluide de refroidissement", le circuit (16) de refroidissement comportant au moins une première source (44) de chaleur susceptible de chauffer le fluide de refroidissement, et au moins un radiateur (46) principal de refroidissement du fluide de refroidissement qui est susceptible d'être court-circuité ;
**caractérisé en ce que** le circuit (16) de refroidissement comporte un deuxième radiateur (54) secondaire dit "radiateur (54) de batterie" qui permet de transférer directement la chaleur transportée par le fluide de refroidissement chaud à la batterie (10) lorsque le radiateur (46) principal du circuit (16) de refroidissement est court-circuité.

2. Dispositif (12) de régulation thermique selon la revendication précédente, **caractérisé en ce que** le circuit (16) de refroidissement comporte une deuxième source de chaleur qui est formée par un échangeur (38) de chaleur qui est agencé directement en amont du radiateur (54) de batterie et qui permet de transférer la chaleur du fluide de climatisation directement au fluide de refroidissement, l'échangeur (38) de chaleur étant agencé directement en aval du compresseur (22) dans le circuit (14) de climatisation.

3. Dispositif (12) de régulation thermique selon la revendication précédente, **caractérisé en ce que** le circuit (14) de climatisation comporte :
- une conduite (36) de modulation qui est agencée de manière à court-circuiter les évaporateurs (18, 20) en aval du condenseur (26) et en amont du compresseur (22) par commande d'une vanne (30) de modulation lorsque le circuit (14) de climatisation fonctionne selon un mode dit "pompe à chaleur" ; et
- un détendeur (40) qui est agencé en dérivation entre l'échangeur (38) de chaleur et un condenseur (26), une vanne (42) de dérivation permettant de commander le passage du fluide de climatisation dans le détendeur (40) dans le mode "pompe à chaleur" du circuit (14) de climatisation.

4. Dispositif (12) de régulation thermique selon l'une quelconque des revendications précédentes, **caractérisé en ce que** le circuit (16) de refroidissement comporte une conduite (60) de démarrage à froid dont une première extrémité est raccordée en dérivation entre le radiateur (54) de batterie et la première source (44) de chaleur et dont une deuxième extrémité est agencée en amont de l'échangeur (38) de chaleur, une pompe (64) étant agencée dans la branche comportant le radiateur (54) de batterie, et une vanne (62) de démarrage à froid permettant, dans une première position de démarrage à froid, de faire tourner en boucle le fluide de refroidissement en court-circuitant simultanément la première source (44) de chaleur et le radiateur (46) principal.

5. Dispositif (12) de régulation thermique selon la revendication précédente, **caractérisé en ce que** la vanne (62) de démarrage à froid est susceptible d'être commandée dans une deuxième position de chauffage lorsque la première source (44) de chaleur est suffisamment chaude et dans laquelle le fluide de refroidissement tourne en boucle en passant par la première source (44) de chaleur puis par la deuxième source (38) de chaleur avant d'atteindre la batterie (10), la conduite 60 de démarrage à froid étant obturée.

6. Dispositif (12) de régulation thermique selon la revendication précédente, **caractérisé en ce que** la vanne (62) de démarrage à froid est susceptible d'être commandée dans une troisième position dans laquelle le radiateur (54) de batterie (10) est court-circuitée, le circuit (16) de refroidissement comportant une deuxième pompe (48) pour permettre la circulation du fluide de refroidissement entre la première source (44) de chaleur et le radiateur (46) principal.

7. Dispositif (12) de régulation thermique selon l'une quelconque des revendications 2 à 6, **caractérisé en ce que** le circuit (16) de refroidissement comporte des thermoplongeurs (58) qui sont commandés pour chauffer le fluide de refroidissement lorsque les deux sources (38, 44) de chaleurs ne sont pas assez chaudes.

8. Dispositif (12) de régulation thermique selon l'une quelconque des revendications 2 à 7, **caractérisé en ce que** la partie de l'échangeur (38) de chaleur qui est traversée par le fluide de climatisation forme un condenseur (39).

9. Dispositif (12) de régulation thermique selon l'une quelconque des revendications précédentes, **caractérisé en ce que** la première source de chaleur est formée par une unité (44) électronique de commande qui gère la charge électrique de la batterie (10).

## Patentansprüche

1. Thermische Regelungseinrichtung (12) einer Batterie (10) aus elektrischen Akkumulatoren, die an Bord eines Kraftfahrzeugs eingebaut ist, wobei die thermische Regelungseinrichtung (12) umfasst:
- einen Klimatisierungskreislauf (14) des Kraftfahrzeugs, in dem ein erstes Wärmeträgerfluid, "Klimatisierungsfluid" genannt, zirkuliert, wobei der Klimatisierungskreislauf (14) mindestens einen Verdampfer (18) umfasst, der es ermöglicht, die von der Batterie (10) abgegebene Wärme direkt auf das Klimatisierungsfluid zu übertragen, wobei ein Kompressor (22) es ermöglicht, den Druck und die Temperatur des Klimatisierungsfluids anzuheben;
- einen Kühlkreislauf (16), in dem ein zweites Wärmeträgerfluid, "Kühlfluid" genannt, zirkuliert, wobei der Kühlkreislauf (16) mindestens eine erste Wärmequelle (44) umfasst, die geeignet ist, das Kühlfluid zu erwärmen, und mindestens einen Hauptradiator (46) zur Kühlung des Kühlfluids, der geeignet ist, kurzgeschlossen zu werden;
**dadurch gekennzeichnet, dass** der Kühlkreislauf (16) einen zweiten Sekundärradiator (54), "Batterieradiator (54)" genannt, umfasst, der es ermöglicht, die vom warmen Kühlfluid mitgeführte Wärme direkt an die Batterie (10) zu übertragen, wenn der Hauptradiator (46) des Kühlkreislaufs (16) kurzgeschlossen ist.

2. Thermische Regelungseinrichtung (12) nach dem vorhergehenden Anspruch, **dadurch gekennzeichnet, dass** der Kühlkreislauf (16) eine zweite Wärmequelle umfasst, die aus einem Wärmetauscher (38) gebildet ist, der direkt stromauf des Batterieradiators (54) angeordnet ist und der es ermöglicht, die Wärme des Klimatisierungsfluids direkt an das Kühlfluid zu übertragen, wobei der Wärmetauscher (38) direkt stromab des Kompressors (22) im Klimatisierungskreislauf (14) angeordnet ist.

3. Thermische Regelungseinrichtung (12) nach dem vorhergehenden Anspruch, **dadurch gekennzeichnet, dass** der Klimatisierungskreislauf (14) umfasst:
- eine Modulationsleitung (36), die so angeordnet ist, dass sie die Verdampfer (18, 20) stromab des Kondensators (26) und stromauf des Kompressors (22) durch Steuern eines Modulationsventils (30) kurzschließt, wenn der Klimatisierungskreislauf (14) in einer Betriebsart, die "Wärmepumpe" genannt wird, arbeitet und
- einen Druckminderer (40), der abgezweigt zwischen dem Wärmetauscher (38) und einem Kondensator (26) angeordnet ist, wobei ein Abzweigventil (42) es ermöglicht, den Durchfluss des Klimatisierungsfluids in den Druckminderer (40) in der Betriebsart "Wärmepumpe" des Klimatisierungskreislaufs (14) zu steuern.

4. Thermische Regelungseinrichtung (12) nach einem der vorhergehenden Ansprüche, **dadurch gekennzeichnet, dass** der Kühlkreislauf (16) eine Kaltstartleitung (60) umfasst, deren erstes Ende abgezweigt zwischen dem Batterieradiator (54) und der ersten Wärmequelle (44) angeschlossen ist und deren zweites Ende stromauf des Wärmetauschers (38) angeordnet ist, wobei eine Pumpe (64) in dem Strang, der den Batterieradiator (54) umfasst, angeordnet ist, und ein Kaltstartventil (62) es in einer ersten Kaltstartposition ermöglicht, das Kühlfluid in einer Schleife umlaufen zu lassen, indem es die erste Wärmequelle (44) und den Hauptradiator (46) gleichzeitig kurzschließt.

5. Thermische Regelungseinrichtung (12) nach dem vorhergehenden Anspruch, **dadurch gekennzeichnet, dass** das Kaltstartventil (62) geeignet ist, in eine zweite Heizposition gesteuert zu werden, wenn die erste Wärmequelle (44) ausreichend warm ist, und in der das Kühlfluid in einer Schleife umläuft, wobei es durch die erste Wärmequelle (44) und dann durch die zweite Wärmequelle (38) fließt, bevor es die Batterie (10) erreicht, wobei die Kaltstartleitung (60) verschlossen ist.

6. Thermische Regelungseinrichtung (12) nach dem vorhergehenden Anspruch, **dadurch gekennzeichnet, dass** das Kaltstartventil (62) geeignet ist, in eine dritte Position gesteuert zu werden, in der der Radiator (54) der Batterie (10) kurzgeschlossen ist, wobei der Kühlkreislauf (16) eine zweite Pumpe (48) umfasst, um die Zirkulation des Kühlfluids zwischen der ersten Wärmequelle (44) und dem Hauptradiator (46) zu ermöglichen.

7. Thermische Regelungseinrichtung (12) nach einem der Ansprüche 2 bis 6, **dadurch gekennzeichnet, dass** der Kühlkreislauf (16) Heizstäbe (58) umfasst, die gesteuert werden, um das Kühlfluid zu erwärmen, wenn die beiden Wärmequellen (38, 44) nicht warm genug sind.

8. Thermische Regelungseinrichtung (12) nach einem der vorgehenden Ansprüche 2 bis 7, **dadurch gekennzeichnet, dass** der Teil des Wärmetauschers (38), der vom Klimatisierungsfluid durchquert wird, einen Kondensator (39) bildet.

9. Thermische Regelungseinrichtung (12) nach einem der vorhergehenden Ansprüche, **dadurch gekennzeichnet, dass** die erste Wärmequelle aus einer elektronischen Steuereinheit (44) gebildet ist, die die elektrische Ladung der Batterie (10) verwaltet.

## Claims

1. Device (12) for controlling the temperature of a battery (10) onboard a motor vehicle, the temperature control device (12) including:
- an air-conditioning circuit (14) of the motor vehicle in which circulates a first heat-transfer fluid termed the "air-conditioning fluid", the air-conditioning circuit (14) including at least one evaporator (18) for direct transfer of heat emitted by the battery (10) to the air-conditioning fluid, a compressor (22) making it possible to increase the pressure and the temperature of the air-conditioning fluid;
- a cooling circuit (16) in which circulates a second heat-transfer fluid termed the "cooling fluid", the cooling circuit (16) including at least one first heat source (44) adapted to heat the cooling fluid and at least one main radiator (46) for cooling the cooling fluid that can be short-circuited;
**characterized in that** the cooling circuit (16) includes a second, secondary radiator (54) termed the "battery radiator (54)" for direct transfer of heat conveyed by the hot cooling fluid to the battery (10) when the main radiator (46) of the cooling circuit (16) is short-circuited.

2. Temperature control device (12) according to the preceding claim, **characterized in that** the cooling circuit (16) includes a second heat source that is formed by a heat exchanger (38) that is arranged directly upstream of the battery radiator (54) and makes it possible to transfer heat from the air-conditioning fluid directly to the cooling fluid, the heat exchanger (38) being arranged directly downstream of the compressor (22) in the air-conditioning circuit (14) .

3. Temperature control device (12) according to the preceding claim, **characterized in that** the air-conditioning circuit (14) includes:
- a modulation pipe (36) that is adapted to short-circuit the evaporators (18, 20) downstream of the condenser (26) and upstream of the compressor (22) by controlling a modulation valve (30) when the air-conditioning circuit (14) is operating in a mode termed the "heat pump" mode; and
- an expansion valve (40) that is arranged in a bypass between the heat exchanger (38) and a condenser (26), a bypass valve (42) enabling control of the passage of the air-conditioning fluid in the expansion valve (40) in the "heat pump" mode of the air-conditioning circuit (14).

4. Temperature control device (12) according to any one of the preceding claims, **characterized in that** the cooling circuit (16) includes a cold start pipe (60) a first end of which is connected as a bypass between the battery radiator (54) and the first heat source (44) and a second end of which is arranged upstream of the heat exchanger (38), a pump (64) being arranged in the branch including the battery radiator (54), and a cold start valve (62) enabling, in a first, cold start position, the cooling fluid to flow in a loop by short-circuiting simultaneously the first heat source (44) and the main radiator (46).

5. Temperature control device (12) according to the preceding claim, **characterized in that** when the first heat source (44) is sufficiently hot the cold start valve (62) can be set to a second heating position in which the cooling fluid flows in a loop through the first heat source (44) and then the second heat source (38) before reaching the battery (10), the cold start pipe (60) being blocked.

6. Temperature control device (12) according to the preceding claim, **characterized in that** the cold start valve (62) can be set to a third position in which the radiator (54) of the battery (10) is short-circuited, the cooling circuit (16) including a second pump (48) to enable circulation of the cooling fluid between the first heat source (44) and the main radiator (46).

7. Temperature control device (12) according to any one of Claims 2 to 6, **characterized in that** the cooling circuit (16) includes thermo plungers (58) that heat the cooling fluid if the two heat sources (38, 44) are not hot enough.

8. Temperature control device (12) according to any one of Claims 2 to 7, **characterized in that** the part of the heat exchanger (38) through which the air-conditioning fluid flows forms a condenser (39).

9. Temperature control device (12) according to any one of the preceding claims, **characterized in that** the first heat source is formed by an electronic control unit (44) that controls the electrical charging of the battery (10).
